Europäisches Patentamt

European Patent Office

Office européen des brevets

(19)

(11) Publication number: **0 103 402**
**A1**

(12) # EUROPEAN PATENT APPLICATION

(21) Application number: **83304631.1**

(22) Date of filing: **10.08.83**

(51) Int. Cl.³: **G 11 B 1/00**, G 11 B 17/04

(30) Priority: **11.08.82 GB 8223169**

(43) Date of publication of application: **21.03.84**
**Bulletin 84/12**

(84) Designated Contracting States: **AT BE CH DE FR IT LI
LU NL SE**

(71) Applicant: **AMSTRAD CONSUMER ELECTRONICS PLC.,
1/7 Garman Road, Tottenham London, N17 OUF (GB)**

(72) Inventor: **Sugar, Alan Michael, Bramsdons Roding Lane,
Chigwell Essex (GB)**
Inventor: **Watkins, Robert John, Midstreams Bedlar's
Green Great Hallingbury, Bishop Stortford Hertfordshire
(GB)**

(74) Representative: **Abnett, Richard Charles et al, REDDIE &
GROSE 16 Theobalds Road, London WC1X 8PL (GB)**

(54) **Apparatus for playing a record disc.**

(57) Apparatus for playing a record disc comprises a generally closed rectangular housing (16) having an opening (18) at one side, a turntable assembly (30) operable to play a record disc and a carriage or tray (34) which supports the turntable assembly (30). The carriage (34) is slidable through the opening (18) in the housing (16) and drive means (36) are provided for driving the carriage (34) between an inner position in which the turntable (30) is fully received within the housing (16), and an outer position in which a record disc can be placed on the turntable (30). The turntable assembly (30) includes a pick-up arm mounted on the carriage (34) and the turntable (30) is operable to play the record disc in all positions of the carriage (34). Consequently, it is possible to position the pick-up arm on any selected portion of the disc with the turntable (30) in its outer position and then to operate the drive means (36) to return the turntable (30) to its inner position where the housing (16) protects the record disc from airborne dust and dirt.

# APPARATUS FOR PLAYING A RECORD DISC

This invention relates to apparatus for playing a record disc, most typically a gramophone record.

Any record player requires that access is permitted to the turntable to enable the user to place a record centrally on the turntable using the spindle as a guide, and hitherto this has meant that in equipment known as a rack system and comprising a turntable, an associated amplifier and possibly a tuner and/or cassette tape player, the turntable has always had to be located on the top of the system and has had to be provided with a removable or alternatively hinged lid. This has had various disadvantages; first it has inhibited the designer's freedom in designing as aesthetically pleasing system, secondly the lid gets in the user's way when placing a record on the turntable and if not hinged has to be put down somewhere while the record is placed in position, and thirdly the equipment cannot be used when mounted in a shelving system without a very large space between the top of the equipment and the shelf above.

It is known, for example, from British patent specifications nos. 488067, 644778 and 727458, to mount apparatus for playing a record disc on a tray or drawer which slides in a horizontal plane in and out of the cabinet in which the apparatus is housed. Although the arrangements described in these specifications avoid the need to provide sufficient space for a hinged lid to be opened, we have appreciated that they do have one major disadvantage. Because the drawers are intended to be slid in and out of the cabinet by hand, it is not possible to slide the drawer back into the cabinet once a record is playing as it is almost inevitable that the stylus of the pick-up arm will be disturbed. Consequently, the record disc must, with all these arrangements, be played in a position in which the disc is exposed to the atmosphere and the dirt and dust it carries. It is with a view to avoiding this exposure to airborne dust that record playing apparatus is normally provided with a lid or cover.

British patent application no. 2075242 describes apparatus in which the turntable is, in use, mounted on a motor

0103402

driven plate which slides horizontally into and out of a front opening in the cabinet. Again, however, the apparatus is such that a record disc can only be played in a position in which a substantial part of the disc is outside the cabinet and exposed to the dust-carrying atmosphere.

It is also known, for example, from published European patent application no. 0040880, to provide apparatus for playing a record disc comprising a generally closed housing having an opening at one side; a turntable assembly operable to play a record disc; a carriage supporting the turntable assembly and slidable through the opening in the housing and drive means for driving the carriage between an inner position, in which the turntable assembly is fully received within the housing, and an outer position in which a record disc can be placed on the turntable.

The apparatus described in application 0040880 is, however, provided with a conventional automatic pick-up arm, mounted within the housing, which operates when the carriage is returned to the inner position. Although this arrangement has the advantge that the record disc is played within the cabinet, it is inconvenient to use because the automatic pick-up arm will only position the stylus at the outermost edge of the disc and it is not, therefore, possible to select a particular portion of the disc at will or to resume playing after an interruption without beginning at the outermost edge again.

The apparatus in accordance with the present invention is characterised in that the turntable assembly includes a pick-up arm which is mounted on the carriage and in that the turntable assembly is operable to play the record disc in all positions of the carriage. Thus, a disc may be placed on the turntable when it in the outer position, the pick-up arm positioned on any selected portion of the disc and the drive means operated to return the carriage to its inner position within the cabinet while the disc is playing.

The invention will be described in more detail by way of example with reference to the drawings in which:-

Figure 1 illustrates record playing apparatus in accordance with this invention embodied in a rack system mounted in a shelving system;

Figure 2 is a front view of the record playing apparatus with part of the housing removed;

Figure 3 is a side view of the record playing apparatus with part of the housing removed;

Figure 4 is a view similar to Figure 2 with the tray in its outer position and with part broken away to show the drive train;

Figure 5 is a plan view showing the tray in its outer position; and

Figure 6 is a circuit diagram for the drive motor circuit.

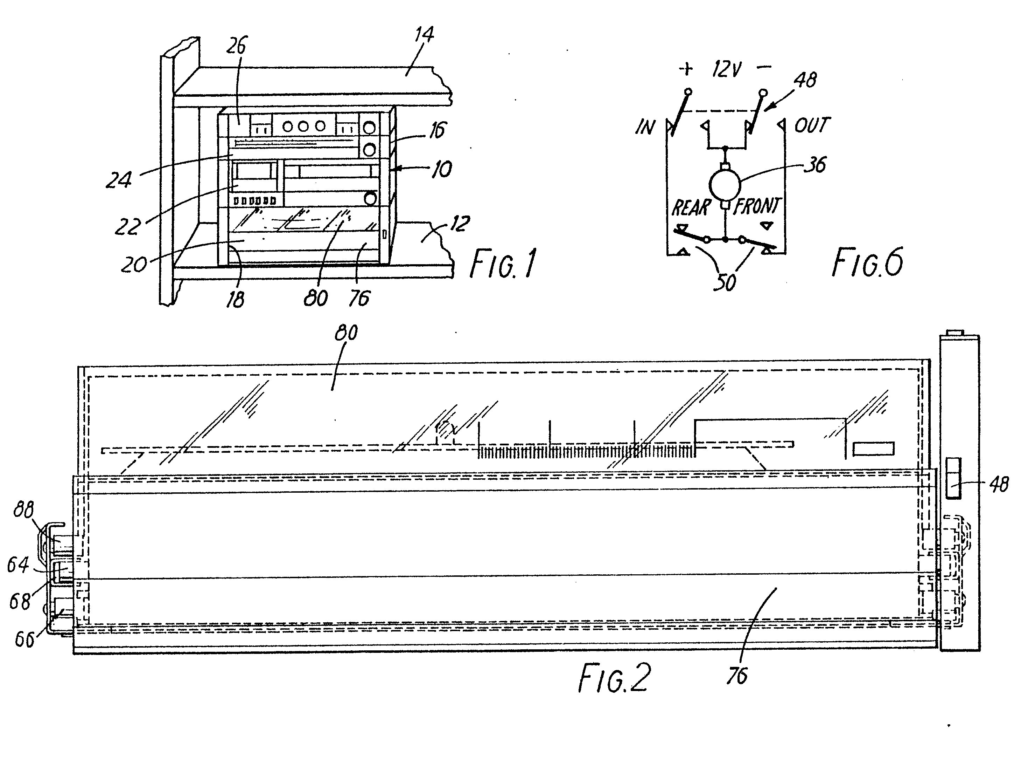

Figure 1 illustrates a rack system 10 mounted between two shelves 12, 14 of a shelving system. The rack system is seen to fit neatly between the two shelves. The rack system 10 includes a gramophone record player section 20, an amplifier section 26, a cassette deck section 22, and a radio tuner section 24. As is seen the record player section 20 is not the top section but as shown forms the bottom section of the system.

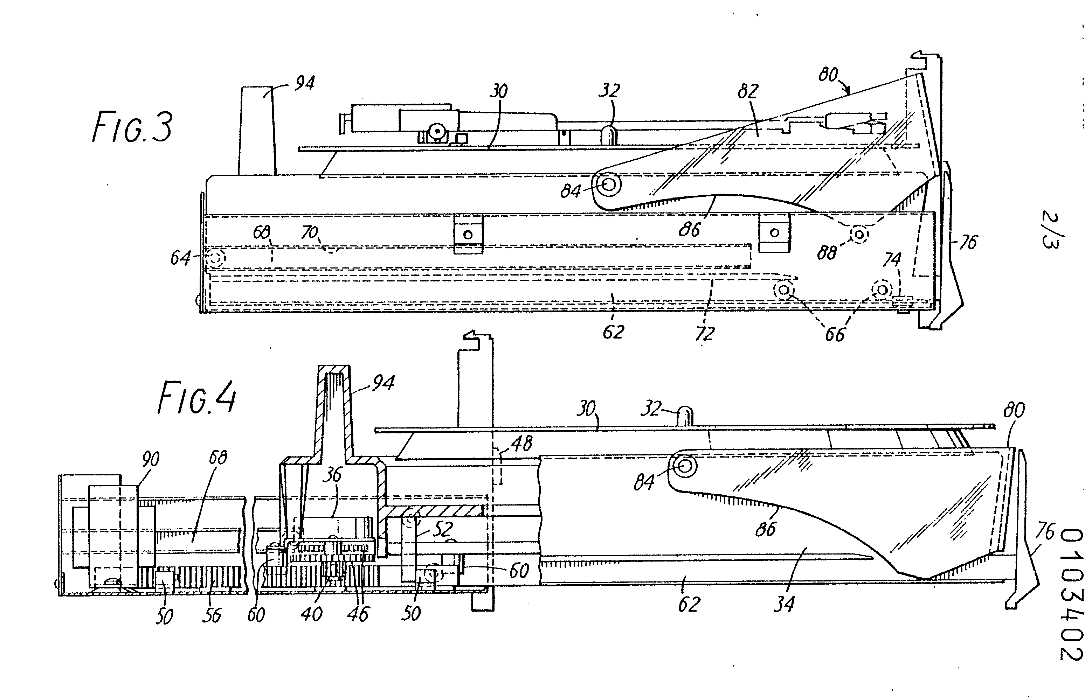

The rack system 10 has a wooden housing 16 which is closed on the back, sides, top and bottom, and is also closed on the front except for the bottom record player section where the housing has an opening 18. There is a metal frame within the wooden housing. The record player section of course has a turntable 30 (Figure 3) with a central spindle 32 over which a record is placed, and this turntable is mounted on a tray 34. A cut-out 35 of required shape is formed in the tray to receive the turntable motor, etc. The tray 34 is of plastics material and is slidably mounted in the housing 16 for movement through the opening 18 in a plane which is parallel to the plane of the turntable 30, between an outer position shown in Figure 4 where the turntable lies outside the housing 16, and an inner position shown in Figure 3 where the turntable is fully received within the housing. When the tray is in the inner position the front portion of the tray closes the opening 18 in a manner to be described below.

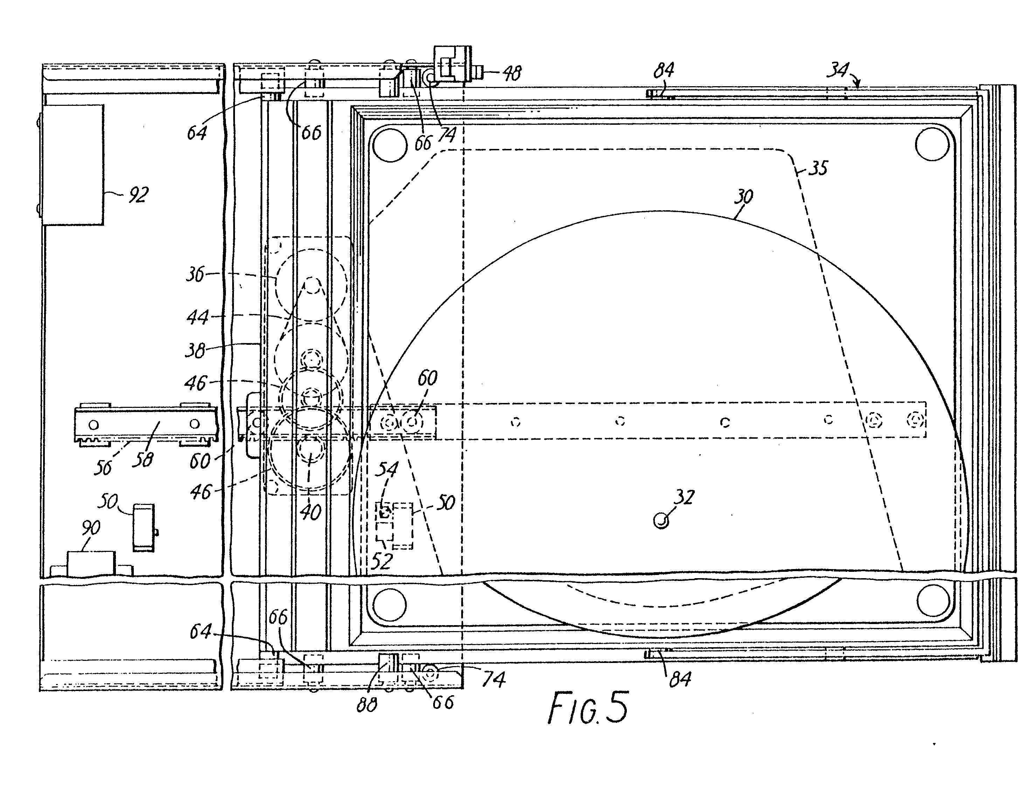

The tray is moved by a reversible d.c. electric motor 36, mounted on the back edge 38 of the tray 34, and which drives a pinion 40 through a drive train 42 comprising a belt 44 and various reduction gears 46. To actuate the motor there is a switching system comprising

0103402

a manually operable cross-over switch 48 and two microswitches 50. The manual switch 48 is mounted on a pillar to the right of the opening 18. The microswitches are fixed on the base of the housing and are actuated by opposed sides of a pillar 52 on the tray. The pillar 52 is mounted by a screw 54 as shown in Figure 5.

The apparatus is thus arranged that the turntable can be driven forward by operation of the switch 48 to permit a record to be placed on the turntable. The record player can be started and the pick up arm placed by hand (or automatically) on the record, and the switch 48 operated again so as to return the tray 34 into the housing.

The movement must be particularly smooth otherwise the pick up arm may be bounced out of the record grooves. This has been achieved in the illustrated example by a combination of measures.

First, as noted above, the pinion 40 is mounted centrally on the back edge of the tray 34, so as to pull evenly on the tray. The pinion engages a rack 56 which is formed on the side of a plastics moulding secured to the base of the housing. Formed integrally with the rack is a guide track 58 which receives two downwardly extending guide rollers 60 one to each side of the pinion 40. The gearing between the drive motor and the pinion is such that the tray moves at a speed of less than 2 cm/s and preferably about 1 cm/s.

Each side of the tray is also guided by rollers. On each side the tray carries a track 62 and at the rear of the tray a roller 64. The sides of the housing each carry two rollers 66 near the front of the housing, for engaging in the track 62 on the tray, and a track 68 for receiving the roller 64 on the tray. The tracks are square channel section to provide two bearing surfaces for the associated rollers, though it will be appreciated that the rear roller 64 will tend to bear on the downwardly-facing upper surface 70 of the track 68 and the rollers 66 will tend to bear on the downwardly-facing upper surface 72 of the track 62. In this way the tray is maintained horizontal during its travel. The tray is also guided by two smaller guide rollers 74 mounted for rotation about vertical axes and positioned at the ends of the opening 18. These rollers stop the tray 'skewing' as it moves and assist in keeping it in line with the fore-and-aft direction.

The front of the tray has a fixed front plate 76 covering the lower half of the opening 18 and a pivotal transparent cover member 80 which can lie behind the front plate 76, as shown in Figure 4, or can be raised, as shown in Figure 3, to cover the upper half of the opening 18. The cover member 80 has for this purpose two side arms 82 which are mounted in pivots 84 on the tray 34. The lower surfaces 86 of the arms 82 are shaped with a cam profile and engage with fixed cam followers 88 on the housing. Thus when the tray is in its outer position the cover falls to its lower position behind the front plate 76. As the tray is driven rearwardly by the motor the cam followers 88 engage the cam surfaces 86 and raise the cover gradually until with the frontplate 76 it completely closes the opening 18.

The circuit for the motor 36 is shown in Figure 6. A d.c. supply is provided by a transformer 90 (Figs. 4 and 5) and rectifier circuitry 92 of standard construction. This supply is connected through the cross-over switch 48 so that one polarity is applied selectively to one pole of the motor and the other polarity is applied to the other pole in one case through the rear microswitch 50 and in the other case through the front microswitch 50. The microswitches are normally closed and open when the pillar 52 reaches them.

To ensure that a user cannot inadvertently touch the electric parts a plastics profile 94 is formed at the back of the tray 34. Also there is a cover plate (not shown) provided above the turntable within the housing to prohibit access to the circuitry in the sections above.

0103402

C L A I M S :

1.      Apparatus for playing a record disc comprising:

a generally closed housing (16) having an opening (18) at one side;

a turntable assembly (30) operable to play a record disc;

a carriage (34) supporting the turntable assembly (30) and slidable through the opening (18) in the housing (16); and

drive means (36) for driving the carriage (34) between an inner position, in which the turntable assembly (30) is fully received within the housing (16), and an outer position in which a record disc can be placed on the turntable (30) characterised in that the turntable assembly (30) includes a pick-up arm mounted on the carriage (34) and in that the turntable assembly (30) is operable to play the record disc in all positions of the carriage (34).

2.      Apparatus according to claim 1 characterised in that it includes manually-operable switch means (48) for selectively actuating the drive means (36) to move the carriage (34) between its inner and outer positions.

3.      Apparatus according to claim 1 or 2 characterised in that it includes microswitch means (50) for causing the drive means (36) to stop when the inner and outer positions are reached.

4.      Apparatus for playing a record disc having a turntable (30) having a central spindle (32) over which a record disc is placed;

a generally rectangular housing (16) providing an enclosure which is essentially closed on five sides and having an opening (18) on its sixth side;

a carriage (34) mounting the turntable (30) and slidable through the opening (18) in a plane substantially parallel to the plane of the turntable (30) between an outer position where all or substantially all of the turntable (30) is outside the confines of the enclosure, whereby a record disc can be positioned on or removed from the turntable (30), and an inner position in which the turntable (30) is fully received within the housing (16) and a portion of the carriage (34) closes the opening (18);  and

drive means (36) connected to drive the carriage (34) between its inner and outer positions; characterised by

manually-operable switch means (48) for selectively actuating the motor means (36) to move the carriage (34) in its two directions; and by

microswitch means (50) for arresting the drive means (36) when the said inner and outer positions are reached.

5.      Apparatus according to any preceding claim characterised in that the drive means (36) consists of a d.c. motor.

6.      Apparatus according to claim 5 characterised in that the manual switch means (48) comprises a cross-over switch.

7.      Apparatus according to any preceding claim characterised in that the drive means (36) consists of an electric motor mounted on the carriage (34).

8.      Apparatus according to any preceding claim, characterised in that the drive means (36) consists of an electric motor connected to drive a pinion (40) which engages with a rack (56).

9.      Apparatus according to claim 8, characterised in that the electric motor (36) is connected to the pinion (40) by reduction gearing (46) sufficient to cause the carriage (34) to move at a speed not exceeding 2 cms per second.

10.     Apparatus according to claim 8 or 9, characterised in that the rack (56) is formed integrally with a guide track (58) in which engage two guide rollers (60) longitudinally displaced to either side of the pinion (40).

11.     Apparatus according to claims 8, 9 or 10, characterised in that the motor (36) is mounted on the carriage (34) with the pinion (40)

0103402

located centrally of the inner edge of the carriage (34).

12. Apparatus according to any preceding claim, characterised in that the carriage (34) is guided by means of at least two rollers (64,66) and engaging guide surfaces (70,72) along each of its side edges to maintain the carriage (34) horizontal as it slides between its inner and outer positions.

13. Apparatus according to claim 12, characterised in that each roller (64,66) runs in a track (68) one side of which provides the associated guide sueface (70,72).

14. Apparatus according to any preceding claim, characterised in that it includes two rollers (74) one either side of the opening (18) engaging the side edges of the carriage (34) to inhibit transverse sideways movement of the carriage (34).

15. Apparatus according to any preceding claim, characterised in that in the inner position of the carriage (34) the opening (18) is closed in part by a preferably-transparent cover member (80) when in its upper position, the cover member (80) being displaced into a lower position as the carriage (34) moves to its outer position.

16. Apparatus according to claim 15, characterised in that the cover member (80) has a front portion for closing the opening (16) and side arms (82) extending inwardly of the housing (16) and pivotally mounted to the sides of the carriage (34).

17. Apparatus according to claim 16, characterised in that the side arms (82) have a cam surface (86) and the housing (16) carries a cam follower (88), the cam surface (86) being shaped to cause the cover member (80) to move between its upper and lower positions as the carriage (34) moves between its inner and outer positions respectively.

18. Apparatus according to any preceding claim, characterised

0103402

in that the microswitch means (50) comprises two microswitches respectively for the inner and outer positions of the carriage (34) and bearing against opposed sides of a single switch operating member (52).

FIG. 1

FIG. 6

FIG. 2

0103402

FIG.3

FIG.4

FIG.5

0103402

European Patent Office

**EUROPEAN SEARCH REPORT**

Application number

EP 83 30 4631

## DOCUMENTS CONSIDERED TO BE RELEVANT

| Category | Citation of document with indication, where appropriate, of relevant passages | Relevant to claim |
|---|---|---|
| X | GB-A-2 091 026 (SONY)<br><br>* Page 1, line 101 - page 2, line 71; page 2, line 112 - page 3, line 105; page 6, lines 93-109; figures 3, 4 * | 4,5,7,<br>12,16 |
| A | | 1-3,8,<br>9 |
| | --- | |
| A | EP-A-0 053 475 (SONY)<br><br>* Claims 2, 4; page 8, lines 10-20; figures 3, 4 * | 1,15-<br>17 |
| | --- | |
| A,D | EP-A-0 040 880 (PHILIPS)<br>* Page 6, line 28 - page 7, line 9; figures 2, 3 * | 12,14 |
| | --- | |
| A | DE-A-3 026 600 (PHILIPS)<br><br>* Page 6, lines 21-31; figures 1, 2 * | |
| | --- | |
| P,A | US-A-4 347 596 (K. ABE et al.) | |
| | --- | |
| A | EP-A-0 026 152 (AIWA) | |
| | ----- | |

**CLASSIFICATION OF THE APPLICATION (Int. Cl. 3)**

G 11 B 1/00
G 11 B 17/04

**TECHNICAL FIELDS SEARCHED (Int. Cl. 3)**

G 11 B 1/00
G 11 B 3/60
G 11 B 17/00

The present search report has been drawn up for all claims

| Place of search | Date of completion of the search | Examiner |
|---|---|---|
| BERLIN | 21-10-1983 | ROGNONI M.G.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document